# EUROPÄISCHE PATENTANMELDUNG

(11) **EP 2 524 834 A1**
(43) Veröffentlichungstag der Anmeldung: **21.11.2012**
(21) Anmeldenummer: 11166529.5
(22) Anmeldetag: 18.05.2011
(51) Int. Cl.: B60L 5/00, B60L 11/18, H02J 5/00

(54) **Vorrichtung zum induktiven Laden zumindest eines elektrischen Energiespeichers eines Elektrofahrzeuges**

(71) Anmelder: Brusa Elektronik AG, 9466 Sennwald (CH)
(72) Erfinder: Krause, Axel, 9650, Nesslau (CH)
(74) Vertreter: Patentbüro Paul Rosenich AG

(57) **Zusammenfassung**

Die Erfindung betrifft eine Vorrichtung zum induktiven Laden zumindest eines elektrischen Energiespeichers eines Elektrokraftfahrzeuges (1) auf einer Ladestrecke (2). Die Vorrichtung umfasst eine Registrierungseinrichtung (20) zur Lokalisierung des Elektrokraftfahrzeuges (1) auf der Ladestrecke (2), eine elektrische Energiequelle (3) in bevorzugter Ausführung als Hochfrequenz-Energiequelle, ein zur Speisung durch die elektrische Energiequelle (3) mit Wechselstrom vorgesehenes System in der Ladestrecke (2) hintereinander verlegter primärer Leiterschleifen mit zumindest je einer Primärwindung, eine am Elektrokraftfahrzeug (1) angeordnete, sekundäre Leiterschleife mit zumindest einer zumindest anteilig vom Induktionsfluss durchflossenen Sekundärwindung, eine Energiezuführungsleitung (4) und Schalteinrichtungen (5) zur Verschaltung der elektrischen Energiequelle (3), der Energiezuführungsleitung (4) und des Systems der primären Leiterschleifen. Alle primären Leiterschleifen der Ladestrecke (2) und die sekundäre Leiterschleife sind erfindungsgemäss als Doppeldipolschleifen (6,7,8) ausgebildet.

## Beschreibung

Die Erfindung betrifft eine Vorrichtung zum induktiven Laden zumindest eines elektrischen Energiespeichers eines Elektrofahrzeuges auf einer Ladestrecke entsprechend den Merkmalen des Oberbegriffes des Anspruches 1.

Je mehr die Automobilentwicklung in Richtung einer Elektrifizierung von Kraftfahrzeugantrieben geht -sei es nun durch Entwicklung von Hybridfahrzeugen, von Elektrofahrzeugen mit einem zusätzlichen, als Range Extender bezeichneten Verbrennungsmotor, welcher mit dem Antriebsstrang nicht verbunden ist, sondern nur die Fahrbatterie auflädt, oder von Elektrofahrzeugen ohne Verbrennungsmotor (ZEV's, d.h. Zero Emission Vehicles) - umso mehr findet sich eine unter den Bedingungen insbesondere der *Zeitknappheit* sowie der *persönlichen Sicherheit* praktikable Art, ein Fahrzeug einer der oben genannten Arten aus einer fahrzeugexternen elektrischen Energiequelle mit Batteriestrom neu zu versorgen, in den Pflichtenheften der Kfz-Konstrukteure. Die genannten Fahrzeugarten werden im Folgenden unter dem Sammelbegriff "Elektrokraftfahrzeuge" zusammengefasst.

Zum Laden der Batterie eines Elektrokraftfahrzeuges gibt es gegenwärtig folgende Möglichkeiten:
In naher Zukunft werden Elektrokraftfahrzeuge mit einem genau spezifizierten Ladekabel zum Laden ihrer Batterien an einer standardisierten Ladestation oder an einer beliebigen Steckdose für einphasigen Wechselstrom oder für Drehstrom geliefert werden. Die Ladung an einer Haushaltssteckdose dauert gegenwärtig etwa 5 bis 8 Stunden, während bei Ladung mit Drehstrom an einer Schnellladestation ungefähr ein halbe Stunde vergeht, bis eine Fahrbatterie wieder auf etwa 80% ihrer Kapazität aufgeladen ist. Der Anschluss an eine Steckdose ist z.B. während des Parkens des Fahrzeuges zu Hause oder in der Nähe des Arbeitsortes oder an öffentlichen Abstellplätzen denkbar.

Eine wesentlich raschere, bereits der Öffentlichkeit vorgestellte Alternative für eine externe Neuversorgung eines Elektrokraftfahrzeuges mit elektrischer Energie besteht im Wechsel der gesamten Fahrbatterie. Es ist geplant, dass nach Bereitstellung der erforderlichen Infrastruktur Elektrokraftfahrzeuge an einer Ladestation auf eine Ladeplattform auffahren, sich sodann unterhalb des Elektrokraftfahrzeuges ein Ladeschacht öffnet, die Fahrbatterie des Elektrokraftfahrzeuges vollautomatisch durch einen Roboter ausgebaut, in ein System unterirdischer Ladestellen einrangiert, geladen und durch eine dort frisch aufgeladene Fahrbatterie ersetzt wird. Der gesamte Prozess des Batteriewechsels wird nicht mehr als einige Minuten in Anspruch nehmen.

Insbesondere wenn zum Laden der Fahrbatterie gar nicht mehr angehalten werden soll, werden berührungslose Ladeverfahren unumgänglich. Man spricht auch von induktivem Laden, weil diese Ladevariante eine Anwendung des Induktionsgesetzes der Elektrotechnik darstellt. Diese ebenfalls bereits bekannte Ladevariante hat- natürlich wiederum erst nach Schaffung der erforderlichen Infrastruktur - zusätzlich den entscheidenden Vorteil, dass Elektrokraftfahrzeuge ohne Verbrennungsmotor mit einer leichteren Fahrbatterie geringerer Kapazität auskommen, wenn diese während der Fahrt über eigens präparierte Ladestrecken im Strassenverlauf rechtzeitig wieder aufgeladen wird. Des Weiteren kann der gesamte Ladevorgang von der Registrierung des Fahrzeuges bis zur finanziellen Abrechnung vollelektronisch abgewickelt werden. Ein Ladevorgang dieser Art ist für den Kunden darüber hinaus auch viel komfortabler. Er ist aber mit dem Auftreten hochfrequenter elektromagnetischer Wechselfelder in der unmittelbaren Umgebung des Elektrokraftfahrzeuges verbunden. Es ist daher darauf zu achten, dass die durch galvanische Trennung von fahrzeugexterner Energiequelle und Fahrbatterie als fahrzeuginterner Energiesenke gewonnene Sicherheit nicht durch gesundheitliche Beeinträchtigungen durch hochfrequente elektromagnetische Störfelder wieder verloren geht oder sogar vermindert wird. Um Beeinträchtigungen dieser Art auszuschliessen, wurden maximal zulässige Grenzwerte für die biologische Belastung durch hochfrequente elektromagnetische Wechselfelder festgesetzt, die zur Gewährleistung der elektromagnetischen Umweltverträglichkeit (EMVU) von Vorrichtungen und Verfahren zur Übertragung elektrischer Energie auf Elektrofahrzeuge unbedingt einzuhalten sind. Beispielsweise darf der Effektivwert von magnetischen Wechselfeldern bis 150kHz höchstens 6,25µT betragen.

Zum induktiven Laden von Elektrokraftfahrzeugen findet sich umfangreicher Stand der Technik. Um die Übersicht zu wahren, sind die Vorrichtungen und Verfahren zum induktiven Laden während der Fahrt erläutert und jene zum induktiven Laden im Stand lediglich zitiert.

In der DE 44 29 656 C1 ist eine Einrichtung zur berührungsfreien Übertragung elektrischer Energie auf einen Gegenstand offenbart, die zum Beispiel bei Fahrstühlen, Krananlagen und Verkehrssystemen Anwendung finden kann. Der dort offenbarte, resonant betriebene Serienschwingkreis umfasst im Wesentlichen einen ortsfesten Teilkreis, bestehend aus einer Wechselspannungsquelle und einer Kettenschaltung mehrerer primärer Leiterschleifenanordnungen, welche auf zwei Arten alternativ verschaltbar sind, und einem mobilen Teilkreis, bestehend aus einer belasteten sekundären Leiterschleife. Der mobile Teilkreis bewegt sich über die genannte Kettenschaltung primärer Leiterschleifenanordnungen hinweg. Die primären Leiterschleifenanordnungen sind über lokale Schalter mit der Hin- und Rückleitung des ortsfesten Teilkreises so verschaltet, dass folgende zwei primäre Kreisvarianten entstehen:
Befindet sich der mobile Teilkreis über einer primären Schleifenanordnung, so realisieren die örtlichen Schalter eine einfache primäre Leiterschleife zwischen Hin- und Rückleitung, wobei die physikalisch sinnvoll gewählten Zählpfeile des Stromflusses durch beide Schleifenhälften zu jenen des Stromflusses durch die jeweils örtlich benachbarte Hin- bzw. Rückleitung offenbarungsgemäss gleichsinnig orientiert sind. Verlässt der mobile Teilkreis den Bereich induktiver Kopplung zur betrachteten primären Schleifenanordnung, so wird die örtliche Verschaltung dieser Schleifenanordnung zwischen Hin- bzw. Rückleitung so geändert, dass je eine primäre Schleifenhälfte getrennt zur Hin- bzw. Rückleitung parallel geschaltet ist und die physikalisch sinnvoll gewählten Zählpfeile des Stromflusses durch jede der beiden Schleifenhälften zu jenen des Stromflusses durch die jeweils örtlich benachbarte Hin- bzw. Rückleitung offenbarungsgemäss entgegengesetzt orientiert sind.

Schaltungstechnisch kann man den beschriebenen primären Teil des Serienresonanzkreises als Kettenschaltung von primären Vierpolen ansehen, wobei jeder Vierpol im Wesentlichen aus einem Abschnitt der Hinleitung, einer der primären Schleifenordnungen, einem Abschnitt der Rückleitung und den lokalen Schaltern besteht.

Alle primären Vierpole der beschriebenen Kettenschaltung ab der Wechselspannungsquelle bis exklusiv zum aktuell induktiv zum Sekundärkreis Energie übertragenden, d.h. aktiven primären Vierpol werden zwar durch die Wechselspannungsquelle gespeist, durch ihre beschriebene Struktur nach Umschaltung auf den passiven Betriebszustand wird jedoch das Magnetfeld jedes dieser primären Vierpole näherungsweise annulliert. Um die Beeinträchtigung der lokalen Energieübertragung durch den aktiven Vierpol zufolge dieser passiv geschalteten primären Vierpole zu vermindern, wird durch *örtliche serielle* Kondensatoren und *einen der gesamten Vierpolkette vorgeschalteten parallelen* Kondensator eine Reaktanzkompensation durchgeführt. Alle übrigen primären Vierpole bis zum Ende von Hin- und Rückleitung sind offenbarungsgemäss stromlos.

Diese Einrichtung eignet sich zur Aufladung der Batterien von Elektrokraftfahrzeugen während der Fahrt *und* im Stand und bewirkt eine gute magnetische Kopplung zwischen Primär- und Sekundärkreis. Sie erreicht den damit einhergehenden guten Wirkungsgrad jedoch nur durch Anordnung der Energiezuführungsleitungen an den beiden Aussenlängsseiten der Vierpolkette. Da auch diese Energiezuführungsleitungen geringfügig zur Streuinduktivität der aktiven primären Leiterschleife beitragen, sind die wirksamen Streureaktanzen des Gesamtsystems in Abhängigkeit davon, welche primäre Schleifenanordnung aktiv ist, unterschiedlich: je weiter die aktive primäre Leiterschleife von der Energiequelle entfernt ist, desto grösser ist die resultierende Streureaktanz des Gesamtsystems. Daher muss die Kompensation für jede aktiv zugeschaltete Leiterschleife in äusserst kostspieliger Art und Weise individuell angepasst werden.

Da die aktive Leiterschleife ein Dipolfeld mit entsprechend grosser Reichweite erzeugt, sind jene Voraussetzungen geschaffen, die bei Anwendung einer solchen Einrichtung zum induktiven Laden der Batterien eines Elektrokraftfahrzeuges elektromagnetische Störfelder auf beiden Fahrzeugseiten produzieren, welche sich der Nutzung zur Energieübertragung entziehen und die Gesundheit von Mensch und Tier gefährden können. Um die vorgeschriebenen EMVU-Grenzwerte einhalten zu können, muss die Feldstärke auch im für die Energieübertragung vorgesehenen räumlichen Bereich unterhalb des Elektrokraftfahrzeuges klein gehalten werden und folglich zur Übertragung eines vorgegebenen Betrages an elektrischer Energie auf das Elektrokraftfahrzeug die Gesamtlänge der erforderlichen Ladestrecke - welche entweder zusammenhängend ausgeführt oder in einzelne Abschnitte aufgeteilt sein kann - hinreichend gross gewählt werden. Das dadurch provozierte Kostenargument macht die Vorrichtung zur Energieübertragung gemäss der DE 44 29 656 C1 verbesserungswürdig.

Ein weiterer Nachteil der Anordnung ist, dass bei einer überlappenden Position der Sekundärschleife sowohl über der aktiven Primärschleife als auch über der Energie zuführenden passiven primären Leiterschleifenanordnung eine Rückwirkung von der Sekundärschleife auf die beiden kurzgeschlossenen, der Energiezuführung dienenden Primärschleifenhälften erfolgt. Dies kann zu Leistungsverlust und erheblichen Störfeldern führen.

In den Dokumenten US 2005 178 632 A1, WO 9 530 556 A2, US 6 421 600 B1 und US 5 669 470 A wird ein ZEV beschrieben, dessen elektrische Energiespeicher, insbesondere elektrochemische oder elektromechanische Batterien (mit einem auf Magnetlagern rotierenden Rotor in einer Vakuumdichtkammer), an kurzen Teilabschnitten (1-10%) eines Strassenabschnittes induktiv geladen werden. Die induktive Ladung erfolgt über ein System in den Teilabschnitten der Strasse verlegter primärer Leiterschleifen und eine sekundäre Leiterschleife am Fahrzeug. Der Abstand zwischen den primären Leiterschleifen und der sekundären Leiterschleife ist über das Fahrzeug einstellbar und im Sinne möglichst hoher magnetischer Kopplung bis auf Null - letzteres natürlich nur im Stand - verringerbar. Es finden sich jedoch keinerlei Hinweise auf die Einhaltung von EMVU-Grenzwerten oder darauf, wie der mit dem Bau der Ladestrecke verbundene Aufwand verringert werden könnte.

Die Offenbarung der US 5 821 728 A und der DE 19 824 290 A1, wo ein System zur induktiven Ladung von spurgebundenen und spurungebundenen reinen Elektrofahrzeugen während der Fahrt und im Stand vorgestellt wird, hält sich hinsichtlich der ökonomischen Optimierung und der Einhaltung vorgeschriebener EMVU-Grenzwerte in ähnlich engen Grenzen. Dasselbe gilt für die DE 4 115 568 A1, wo alternativ vorgeschlagen wird, die primären Leiterschleifen am Fahrbahnrand anzuordnen und die sekundären Leiterschleifen in den Rädern bzw. in den Reifenkarkassen zu montieren, und auch für die DE 2 916 558 A1, die US 3 914 652 A und die GB 615 916 A.

Die Dokumente WO 2010 031 595 A2, WO 2010 000 495 A1, WO 2010 000 494 A1 und WO 2010 031 593 A2 beschreiben Systeme zur induktiven Übertragung elektrischer Energie auf Elektrofahrzeuge, welche entlang jeder zurückzulegenden Fahrstrecke durchgehend leitungs- und somit spurgebunden sind. Eine Anordnung primärer Windungen bzw. Spulen ist in der Fahrbahn verlegt. Im Gegensatz zu den anderen Dokumenten zum Stand der Technik besteht jedoch die Anordnung sekundärer Leiterschleifen aus einem System mehrerer Leiter, die Wechselströme unterschiedlicher Phase führen und am spurgebundenen Elektrofahrzeug mit Längsausdehnung in dessen Fortbewegungsrichtung verlegt sind. Dadurch sollen Fluktuationen des Leistungsflusses weitgehend ausgeglichen werden. Des Weiteren soll sich die übertragbare elektrische Leistungsdichte auf diese Weise unter Beachtung der zulässigen EMVU-Grenzwerte verbessern.

Nachteilig ist, dass diese Methode zur Übertragung elektrischer Energie *nur für leitungs- und damit spurgebundene Elektrofahrzeuge mit einer gewissen Mindestlänge* anwendbar ist (Zuggarnituren oder zumindest lange Trolleybus-Garnituren) und somit für spurungebundene Elektrokraftfahrzeuge, von denen der Grossteil eine Länge von fünf Metern unterschreitet, ausscheidet.

Vorrichtungen zum induktiven Laden der Batterien von Elektrokraftfahrzeugen im Stand sind in den folgenden Veröffentlichungen offenbart: JP 2010 183 812 A, WO 2010 041 318 A1, DE 4 236 286 A1, WO 96 32 768 A1, EP 0 865 050 A2, WO 9 409 544 A1, EP 0 821 371 A2, DE 20 2009 009 693 U1, DE 20 2009 009 691 U1, DE 20 2009 009 689 U1, US 5 157 319 A, US 5 341 083 A, US 5 703 461 A, US 5 617 003 A, US 5 264 776 A, US 5 498 848 A, US 5 646 500 A, US 5 719 483 A, US 5 606 237 A, US 5 594 315 A, US 5 684 380 A, US 6 396 241 B1, US 5 903 134 A und US 5 457 378 A.

**Aufgabe** der vorliegenden Erfindung ist es nun, eine Vorrichtung zum induktiven Laden der Batterien von Elektrokraftfahrzeugen während der Fahrt zu schaffen, welche bei vorgegebenem Betrag der auf das Elektrokraftfahrzeug zu übertragenden elektrischen Energie und unter Einhaltung der maximal zulässigen EMVU-Grenzwerte gegenüber dem Stand der Technik eine Verkürzung der Ladestrecke und somit auch der Ladezeit sowie eine Senkung der Ladestreckenkosten bewirkt.

Diese Aufgabe wird durch eine Vorrichtung zum induktiven Laden eines Elektrokraftfahrzeuges gemäß Anspruch 1 gelöst.

Die Erfindung umfasst auch ein Elektrokraftfahrzeug mit einem Energiespeicher gemäß Anspruch 12. Das erfindungsgemäße Elektrokraftfahrzeug ist dabei ausgebildet, um im Zusammenhang mit dem Aufladen mit der erfindungsgemäßen induktiven Ladevorrichtung verwendet zu werden.

Kern der Lösung ist die Ausbildung von primärer und sekundärer Leiterschleifen-Einheit als Doppeldipolschleife.

Dadurch kann aufgrund der Kompensation der weitreichenden elektromagnetischer Störwechselfelder zugunsten des erwünschten elektromagnetischen Nahwechselfeldes der mittlere Durchmesser der an der erfindungsgemässen Leiterschleifenanordnung beteiligten Leiterschleifen, nämlich der beiden Hälften der Doppeldipolschleife, deutlich verringert werden. Diese Massnahme zur Kompensation magnetischer Störwechselfelder kann in bekannter Weise durch Verringerung des Abstandes der in der Fahrbahn verlegten Leitungen, d.h. im Extremfall durch Zufuhr der elektrischen Energie über ein Paar eng benachbarter Leitungen (Hin- und Rückleitung), weiter verbessert werden. Die beiden Hälften der Doppeldipolschleife sind deshalb erfindungsgemäss zu beiden Seiten dieser Energiezuführungsleitung angeordnet.

Werden erfindungsgemäss in dieser Weise sowohl alle primären Leiterschleifen der Ladestrecke als auch die den Sekundärkreis bildende mobile Leiterschleife als Doppeldipolschleifen mit horizontal benachbarten Doppeldipolschleifen-Hälften ausgeführt, so erfolgt der Stromfluss in zwei aktiven zugehörigen Hälften jeweils in gegenläufigem Umlaufsinn. Die magnetischen Feldlinien treten daher mit unterschiedlicher Orientierung durch die jeweils horizontal benachbarten Doppeldipolschleifen-Hälften hindurch und können eine darüber liegende sekundäre Doppel-Dipolschleife in gleicher Weise durchdringen. Dies ermöglicht eine gute magnetische Kopplung und damit eine hohe Übertragungsleistung. Die unterschiedliche Orientierung führt aber ausserhalb der Leiterschleifen praktisch zu einer vollständigen Kompensation der Felder.

Auf diese Weise wird beim Einsatz von Doppeldipolschleifen ein grösserer Teil des magnetischen Wechselfeldes in der näheren Umgebung der induktiv miteinander verkoppelten Schleifen gehalten, als dies bei einem Paar einfacher, induktiv miteinander verkoppelter Schleifen der Fall ist. Anders ausgedrückt ist die Fernwirkung des bei der erfindungsgemässen Variante mit der induktiven Energieübertragung verbundenen magnetischen Wechselfeldes geringer bzw. die magnetische Kopplung enger.

Die Erfindung kann sowohl als Ladestrecke mit einer Vielzahl von in Fahrtrichtung nacheinander angeordneten Leiterschleifen-Einheiten ausgebildet sein, als auch als Ladeparkplatz mit einer Leiterschleifen-Einheit. Im letzteren Fall befindet sich das Fahrzeug im Ruhezustand.

Eine Leiterschleifen-Einheit wird aus zwei Schleifenhälften einer Doppeldipolschleife gebildet. Die Schleifenhälften sind dabei seitlich nebeneinander angeordnet. Im Falle einer Ladestrecke sind die zu einer Leiterschleifen-Einheit gehörigen Schleifenhälften in einer Querrichtung, vorzugsweise normal zur Fahrtrichtung bzw. Längsrichtung der Ladestrecke nebeneinander angeordnet. Die sekundäre Leiterschleifen-Einheit am Elektrokraftfahrzeug ist dabei korrespondierend ausgebildet, d.h. die Schleifenhälften sind ebenfalls seitlich nebeneinander angeordnet und zwar in einer Querrichtung zur Fahrtrichtung.

Die Schleifenhälften einer Doppeldipolschleife sind in gegenläufigem Sinn mit elektrischem Strom beaufschlagbar.

Beim Befahren der Ladestrecke überstreichen jeweils die Schleifenhälften des Elektrokraftfahrzeuges nacheinander die Schleifenhälften der Ladestrecke, wobei jeweils eine Schleifenhälfte des Elektrofahrzeuges jene Schleifenhälften der Ladestrecke befährt, die im selben Sinn bestromt werden.

Die Flächen, die von den zwei Schleifenhälften einer Leiterschleifen-Einheit umgrenzt werden, überlappen einander nicht oder zumindest nicht wesentlich. Vorzugsweise liegen die Schleifenhälften zumindest im Wesentlichen in derselben Ebene. In der Ladestrecke liegen die Schleifenflächen im Wesentlichen parallel zur Fahrbahnoberfläche, in einem entsprechenden Elektrokraftfahrzeug parallel zu seiner Unterseite.

Die einzelnen Leiterschleifen-Einheiten sind nun einzeln bzw. unabhängig voneinander mit der Energiezuführeinrichtung verbindbar. Dies erfolgt mittels Schalteinrichtungen. Bei einer Ladestrecke mit einer Vielzahl von Leiterschleifen-Einheiten ist jeder Leiterschleifen-Einheit zumindest eine Schalteinrichtung zugeordnet. Eine Schalteinrichtung verbindet in Abhängigkeit von der Position eines Elektrokraftfahrzeuges auf der Ladestrecke die jeweils unterhalb des Elektrokraftfahrzeuges befindliche Leiterschleifen-Einheit mit der Energiezuführungsleitung, sodass diese Leiterschleifen-Einheit, während das Auto drüberfährt, bestromt ist. Die Registriereinrichtung zur Lokalisierung des Elektrokraftfahrzeuges kommuniziert mit den Schalteinrichtungen derart, dass nur jene Leiterschleifen-Einheit(en) aktiviert wird (werden), die sich gerade unterhalb des darüberfahrenden Elektrokraftfahrzeuges befinden.

Im Falle eines Ladeparkplatzes, also beim Laden im Ruhezustand ist eine Schalteinrichtung nicht zwingend erforderlich.

Die zwei bestromten Schleifenhälften einer Doppeldipolschleife können in ihrem Verlauf einen "Achter", eine 8, bilden oder die Form eines "S" oder einen schlangenähnlichen Verlauf bilden. Die Schleifenhälften können auch aus mehreren Windungen bestehen.

Die Erfindung manifestiert sich auch in einem Verfahren zum Aufladen eines Elektrokraftfahrzeuges.

Die bereits erwähnte Führung von Hin- und Rückleitung der Energiezuführungsleitung in unmittelbarer Nachbarschaft verträgt sich zwanglos mit der Anordnung beider Hälften einer primären Doppeldipolschleife beidseitig der Energiezuführungsleitungen, welche Anordnung die oben beschriebene Verkettung mit der bevorzugt ähnlich geformten, über sie hinweg bewegten sekundären Doppeldipolschleife sicherstellt.

Die durch die Verwendung von Doppeldipolschleifen erzielte Erhöhung des Wirkungsgrades der Energieübertragung kann erfindungsgemäss aber noch weiter gesteigert werden. Bildet man nämlich wie an sich bekannt die Ansteuerung der Leistungsteile der Schalteinrichtungen und die Verschaltung der Energiezuführungsleitung mit dem System primärer Doppeldipolschleifen und mit der elektrischen Energiequelle zur Speisung jeweils jener aktiven primären Doppeldipolschleife aus, bei welcher das Elektrokraftfahrzeug durch eine Registrierungseinrichtung lokalisiert ist, und schaltet erfindungsgemäss bevorzugt jeweils alle übrigen primären Doppeldipolschleifen stromlos, so wird - wie bereits weiter oben erwähnt - im Gegensatz zur DE 44 29 656 C1 verhindert, dass bei der unvermeidlichen räumlichen Überlappung der sekundären, sich in Fahrtrichtung bewegenden Leiterschleife mit zwei primären Leiterschleifen im Zuge der Fortbewegung des Elektrokraftfahrzeuges induktiv Spannungen in jene primäre Leiterschleife, welche gerade verlassen wird, rückgekoppelt werden und somit der Wirkungsgrad der elektrischen Energieübertragung verringert wird.

Die angesprochene Registrierungseinrichtung kann als Hochfrequenz-Übertragungssystem ausgebildet sein, das einen Datenaustausch in beide Richtungen ermöglicht, also vom Fahrzeug zur Schleife und von der Schleife bzw. Übertragungsstation zum Fahrzeug. Vorteilhaft kombinierbar mit der berührungslosen Energieübertragung zur Ladung der Fahrzeugbatterien sind zum Beispiel an sich bekannte Radio-Frequency-Identification (RFID)-Systeme.

Zufolge der oben beschriebenen Verbesserung der magnetischen Kopplung durch Kompensation unerwünschter magnetischer Störwechselfelder kann die Übertragungsleistung in einem Fahrbahnabschnitt so weit gesteigert werden, dass sie gleich gross oder sogar grösser ist als die Leistung, die das Elektrokraftfahrzeug von der Fahrbatterie zur Überwindung der momentanen Fahrwiderstände bezieht. Damit können Elektrokraftfahrzeuge auch bei hoher Geschwindigkeit (z.B. auf Autobahnen) die Batterie nachladen, sodass bei entsprechendem Ausbau der Ladestrecken fast beliebige Reichweiten erzielt werden können. Damit würde die "Achillesferse" des reinen Elektrofahrzeugs (ZEV's) - die geringe Reichweite in Verbindung mit langer Ladezeit - endgültig der Vergangenheit angehören.

Die Umschaltung von einer primären Doppeldipolschleife auf die nächste empfiehlt sich vorzugsweise im Nulldurchgang des Wechselstromes im Serienschwingkreis. Der Kondensator hat zu diesem Zeitpunkt nämlich jenen Energieinhalt, welcher dem letzten eingeschwungenen Zustand des Serienschwingkreises entspricht. Die Stromamplitude muss sich bei dieser Wahl des Schaltzeitpunktes nicht erst wieder neu einschwingen und steht nach dem Schaltvorgang annähernd unverändert weiter zur Energieübertragung zur Verfügung. Weitere Vorteile dieser Wahl des Umschaltzeitpunktes bestehen in geringen Schaltverlusten und in der Vermeidung von Abschaltspannungsspitzen, welche für die Leistungsschalter gefährlich werden könnten.

In diesem Zusammenhang wird ein weiterer erheblicher Kostenvorteil aus der Verwendung von Doppeldipolschleifen beim induktiven Laden offenbar. Alle nicht aktiven primären Leiterschleifen sind ja erfindungsgemäss abgeschaltet, d.h. an jedem der Leistungsschalter, welche zur Zu- und Abschaltung primärer Leiterschleifen zwischen der Wechselstromquelle und der aktiven primären Leiterschleife vorgesehen sind und sich zufolge der erfindungsgemässen Abschaltung dieser Leiterschleifen im Sperrzustand befinden, liegt eine Sperrspannung an. Diese nimmt bei Umschaltung auf die aktive primäre Leiterschleife im Stromnulldurchgang ihr Maximum an. Dadurch, dass jeder dieser Schalter erfindungsgemäss jedoch lediglich die Spannung einer Doppeldipolschleifen-Hälfte als Sperrspannung aufnehmen muss, können sämtliche Leistungsschalter hinsichtlich ihrer Spannungsfestigkeit niedriger dimensioniert werden. Das spart in erheblichem Masse Kosten aktiver Bauelemente.

Aber nicht nur Bauelemente-Kosten, auch Leitungskosten werden durch die erfindungsgemässe Ausbildung der elektrischen Teile der Ladestrecke dadurch eingespart, dass die Energiezuführungsleitung zur Induktivität der aktiven Leiterschleifenanordnung beiträgt.

Darüber hinaus haben umfangreiche Simulationen gezeigt, dass der Wirkungsgrad der elektrischen Energieübertragung auch - soweit dies durch Anpassung an die sekundäre Last möglich ist - durch Abstimmung der Reaktanzen in dem mit Doppeldipolschleifen ausgestatteten Primärkreis und der Reaktanzen im gleichartig ausgebildeten Sekundärkreis weiter optimiert werden kann. Besonders vorteilhaft hat sich hier eine Phasenverschiebung von +90° des Sekundärstromes in Bezug auf den Primärstrom im Fall der Resonanz des primären Serienschwingkreises erwiesen.

In speziellen Verschaltungsvarianten kann der Aufwand an Kosten für passive Bauelemente des Serienschwingkreises gegenüber dem Stand der Technik noch weiter verringert werden und dieser Serienschwingkreis daher auch einfacher dimensioniert werden. Ist zum Beispiel die Rückleitung unverzweigt und die Energiezuführungsleitung mit einem Kurzschluss (über eine Abschlussbrücke) abgeschlossen, so bleibt die am Generator erscheinende Gesamtinduktivität unabhängig davon, welche primäre Doppeldipolschleife gerade aktiv ist. Es ist dann nur ein einziger Kondensator mit konstanter Kapazität erforderlich, um in Anpassung an die primäre Gesamtinduktivität und unabhängig davon, welche primäre Doppeldipolschleife gerade aktiv ist, den erwünschten eingeschwungenen Zustand des Schwingkreises während des gesamten Ladevorganges herbeizuführen.

Zur Herstellung der erfindungsgemässen Struktur von beidseitig an die Energiezuführungsleitung anzubindenden Doppeldipolschleifen erweisen sich schnelle Leistungsschalter als vorteilhaft, welche die Zuschaltung der beiden Doppeldipolschleifen an die Energiezuführungsleitung oder ihre Abschaltung in Verbindung mit der Herstellung einer Verlegung der Energiezufuhr zum in Fahrtrichtung nächsten zuzuschaltenden Paar von Doppeldipolschleifen vornehmen.

Da die auftretenden magnetischen Felder zum induktiven Laden der Batterien eines Elektrokraftfahrzeuges von der Fahrzeugkabine z.B. durch einen Ferritschirm abgeschirmt werden müssen, ist eine Anordnung der sekundären Doppeldipolschleife unterhalb oder im Fahrzeugboden vorteilhaft.

Abgesehen davon eignet sich die erfindungsgemässe Vorrichtung auch zum induktiven Laden der Batterien von Elektrokraftfahrzeugen im Stand. Es kommen dabei genau dieselben bereits erwähnten Vorteile zum Tragen wie bei einem Ladevorgang während der Fahrt, insbesondere die Absenkung der magnetischen Wechselfeldstärke im Hinblick auf einen Aufenthalt von Personen im zugänglichen Bereich neben dem Elektrokraftfahrzeug.

Im Folgenden wird die Erfindung nun anhand einiger Figuren beispielhaft erläutert. Es zeigen
Fig. 1 ein Elektrokraftfahrzeug auf einer schematisch dargestellten, erfindungsgemässen Ladestrecke in einer Seitenansicht,
Fig. 2a das Elektrokraftfahrzeug gemäss Fig. 1 in einer Darstellung im Grundriss,
Fig. 2b einen simulierten Feldverlauf,
Fig. 2c das Elektrokraftfahrzeug gemäss Fig. 1 in einer Frontalansicht,
Fig. 3 bzw. Fig. 4 eine Prinzipdarstellung einer Ladestrecke mit Verlegung einfacher Doppeldipolschleifen und verzweigter bzw. unverzweigter Rückleitung,
Fig. 5 ein Ausführungsbeispiel für einen Leistungsschalter und
Fig. 6 eine Prinzipdarstellung einer Ladestrecke mit Verlegung von Doppeldipolschleifen mit zwei Windungen je Schleifenhälfte und verzweigter Rückleitung.

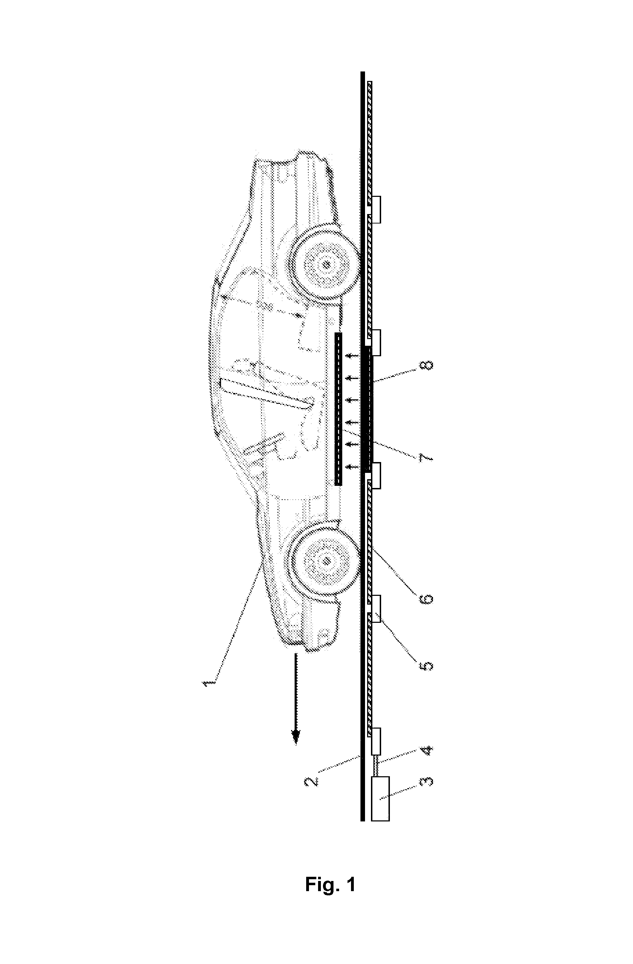

Das Elektrokraftfahrzeug 1 in **Fig. 1** ist mit einer an seiner Unterseite montierten, erfindungsgemässen Doppeldipolschleife 7 ausgestattet und hat eine schematisch dargestellte, erfindungsgemässe Ladestrecke 2 in der eingezeichneten Fahrtrichtung befahren. In der Ladestrecke 2 sind primäre Doppeldipolschleifen 6, welche mit einer Energiezuführungsleitung 4 über Schalteinrichtungen 5 verschaltet sind, verlegt. Die Energiezuführungsleitung 4 wird durch eine elektrische Energiequelle 3 mit Wechselstrom im Bereich hoher Frequenzen, bevorzugt im Bereich 25-150 kHz, gespeist. Die unterhalb des Elektrokraftfahrzeuges 1 befindliche primäre Doppeldipolschleife 8 ist aktiv geschaltet und mit der sekundären Doppeldipolschleife 7 magnetisch verkoppelt. Eine primäre Doppeldipolschleife 8 bildet hier eine Leiterschleifen-Einheit. Entlang einer Ladestrecke 2 sind eine Vielzahl von Leiterschleifen Einheiten hintereinander gereiht. Die sekundäre Doppeldipolschleife 7 bildet am Elektrokraftfahrzeug 1 bildet die sekundäre Leiterschleifen-Einheit.

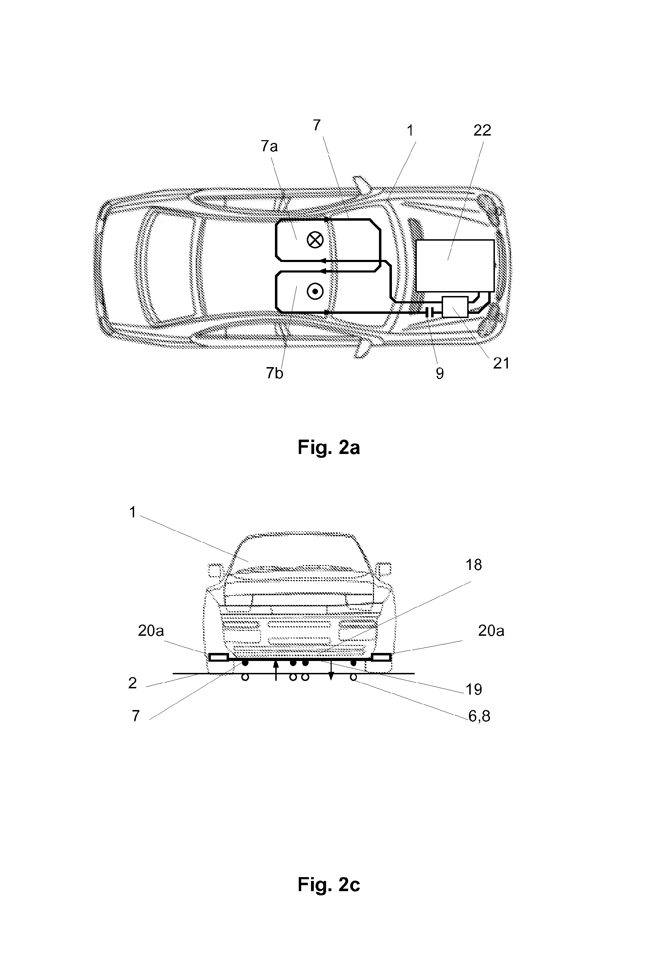

Ein Ausführungsbeispiel der sekundären Doppeldipolschleife 7 ist in **Fig. 2a** **bzw. 2c** dargestellt. Werden zwei durch je eine Schleifenhälfte 7a, 7b berandete Raumflächen mit gleich orientierten Flächenelementen gebildet, so treten die Feldlinien des magnetischen Wechselfeldes (durch Pfeile dargestellt) mit einer Orientierung entsprechend ihrer rechtswendigen Zuordnung zum jeweiligen, durch die eingezeichneten Stromzählpfeile definierten Umlaufsinn durch diese Raumflächen. Die die Doppeldipolschleifen-Hälfte 7a durchdringenden magnetischen Feldlinien treten also in die Zeichenebene hinein, jene magnetischen Feldlinien, welche die Doppeldipolschleifen-Hälfte 7b durchdringen, treten aus der Zeichenebene heraus. Die Doppeldipolschleife ist über einen sekundären Resonanzkondensator 9 mit einem Gleichrichter 21 verbunden, dessen Ausgang wiederum an die Fahrbatterie 22 angeschlossen ist.

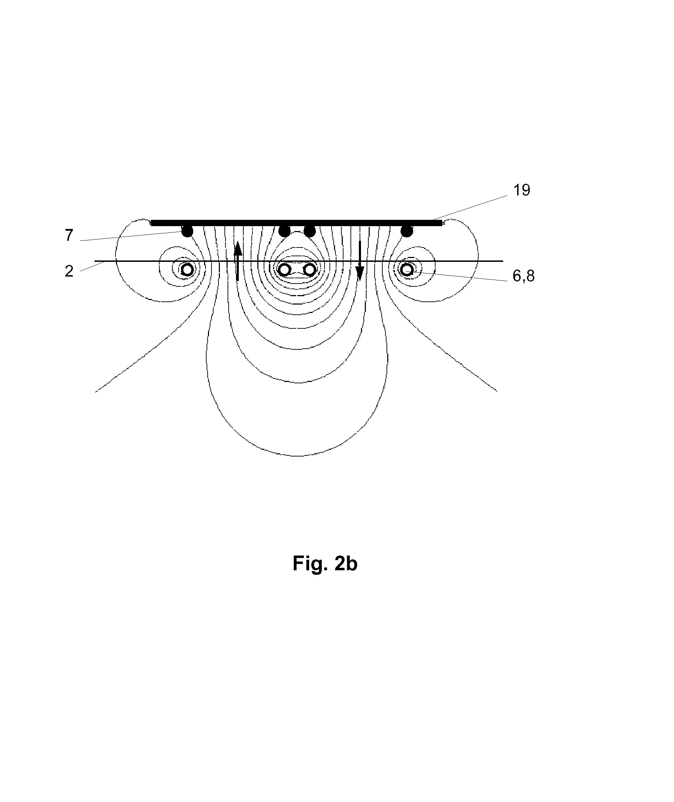

In **Fig. 2b** ist ein simulierter Verlauf der Feldlinien dargestellt. Diejenigen dieser Feldlinien, welche sich nach Durchtritt durch die übereinander liegenden primären und sekundären Doppeldipolschleifen-Hälften über das jeweils andere Paar von Doppeldipolschleifen-Hälften schliessen, begründen die erfindungsgemässe Erhöhung der magnetischen Kopplung, welche zu einer reduzierten Fernwirkung des elektromagnetischen Wechselfeldes und zu einer Schwächung nicht nutzbarer magnetischer Störflüsse zugunsten des magnetischen Nutzflusses führt.

Im Fahrzeugboden 18 oberhalb der sekundären Doppeldipolschleife 7 ist ein Ferritschirm 19 bevorzugt mit einer Dicke von einem oder wenigen Millimetern installiert. Er ist dazu vorgesehen, mit seinen ferromagnetischen Eigenschaften die Fahrzeugkabine gegenüber dem mit der Energieübertragung verbundenen elektromagnetischen Wechselfeld abzuschirmen. Alle einfallenden magnetischen Feldlinien werden am Ferritschirm 19 in tangentialer Richtung gebrochen, sodass der Hauptanteil des Magnetfeldes nicht bis zum Fahrzeugboden 18 durchdringt. Des Weiteren werden durch diesen Ferritschirm eine nennenswerte Erwärmung der Karosserie durch Wirbelströme und daraus resultierende Einbussen im Wirkungsgrad der Energieübertragung verhindert.

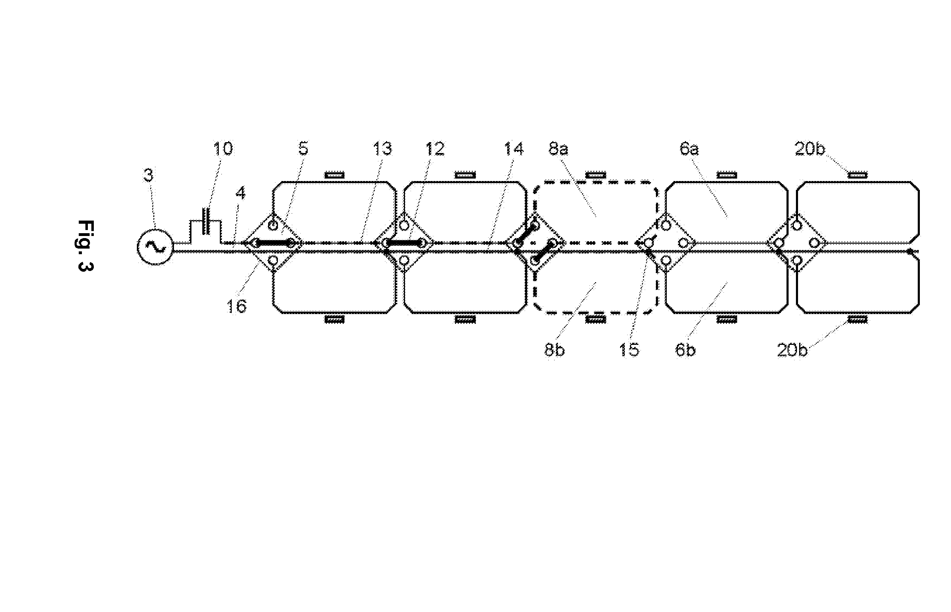

In **Fig. 2a** **bzw. 2c** sind ferner- ebenfalls schematisch - Transponder 20a als Ausführungsbeispiele für Komponenten der Registrierungseinrichtungen 20 an beiden Längsseiten des Fahrzeugbodens 18 dargestellt. Auch die Anordnung lediglich an einer der beiden Längsseiten des Fahrzeugbodens 18 oder an anderen Stellen innerhalb des Fahrzeugbodens 18 ist möglich. Die Lesegeräte 20b mit Sender und Empfänger sind in **Fig. 3** **-** ebenfalls schematisch und beispielhaft eingezeichnet - zu sehen. Während sich die Transponder 20a ausserhalb des Ansprechbereiches der Lesegeräte 20b passiv verhalten, werden sie innerhalb des Ansprechbereiches der Lesegeräte 20b aktiviert, lokalisieren das Elektrofahrzeug 1 auf der Ladestrecke 2 und veranlassen, dass ein Steuergerät der Ladestrecke 2 die Umschaltung auf die entsprechende, danach aktive primäre Doppeldipolschleife 8 einleitet.

**Fig. 3** illustriert schematisch die erfindungsgemässen elektrischen Teile der Ladestrecke 2 im Grundriss. Die elektrische Energiequelle 3 speist die aktive Doppeldipolschleife 8 über die Energiezuführungsleitung 4 und den Kondensator 10. Zur Aktivierung der Doppeldipolschleife 8 schaltet die dazu gehörende Schalteinrichtung 5 einerseits die "obere" (in der Zeichnung oben dargestellte) Doppeldipolschleifen-Hälfte 8a an die Hinleitung 13 und verbindet die Doppeldipolschleifen-Hälfte 8a mit der "unteren" Doppeldipolschleifen-Hälfte 8b. Letztere ist mit der Rückleitung 14 zufolge deren Verzweigung zu allen "unteren" Doppeldipolschleifen-Hälften, die auf einer der beiden Seiten der Energiezuführungsleitung 4 angeordnet sind, fix leitend verbunden.

Die zwischen der elektrischen Energiequelle 3 und der aktiven Doppeldipolschleife 8 liegenden Doppeldipolschleifen 6 mit ihren Hälften 6a und 6b sind ebenso wie die der aktiven Doppeldipolschleife 8 in Fahrtrichtung räumlich nachgeordneten Doppeldipolschleifen 6 erfindungsgemäss stromlos geschaltet.

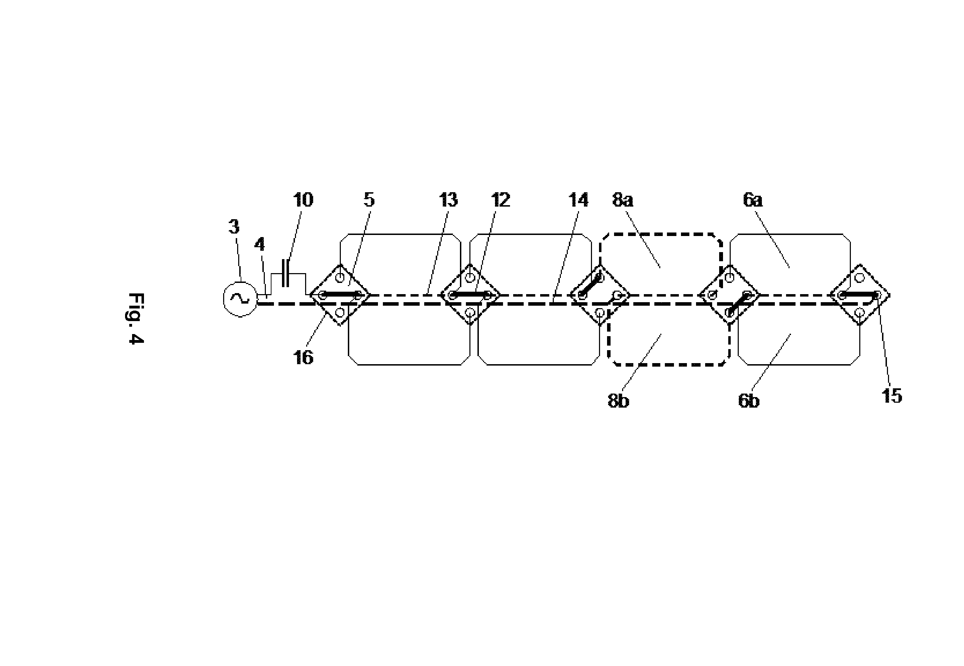

**Fig. 4** zeigt ein weiteres Ausführungsbeispiel der erfindungsgemässen Ladestrecke 2. Die Rückleitung 14 ist hier aber im Gegensatz zur Ausführung gemäss **Fig. 3** unverzweigt. Dies bedingt, dass zur Aktivierung der Doppeldipolschleife 8 sowohl deren "obere" Schleifenhälfte 8a als auch deren "untere" Schleifenhälfte 8b an die Hinleitung 13 angeschaltet werden müssen. An der Herstellung dieser beiden leitenden Verbindungen sind im Unterschied zur Ausführung gemäss **Fig. 3** sowohl die zur Doppeldipolschleife 8 als auch die - in Fahrtrichtung gesehen - zur räumlich nachgeordneten Doppeldipolschleife gehörende Schalteinrichtung 5 beteiligt, sodass eine entsprechende Anpassung der Ansteuerung dieser beiden Leistungsschalter erforderlich ist. Des Weiteren ist im Gegensatz zur Ausführung gemäss **Fig. 3** das Ende 15 der Energiezuführungsleitung 4 bei der von der elektrischen Energiequelle 3 am weitesten entfernten Doppeldipolschleife durch eine Abschlussbrücke kurzgeschlossen. Die Vorzüge dieser Schaltungsvariante wurden weiter oben bereits erläutert.

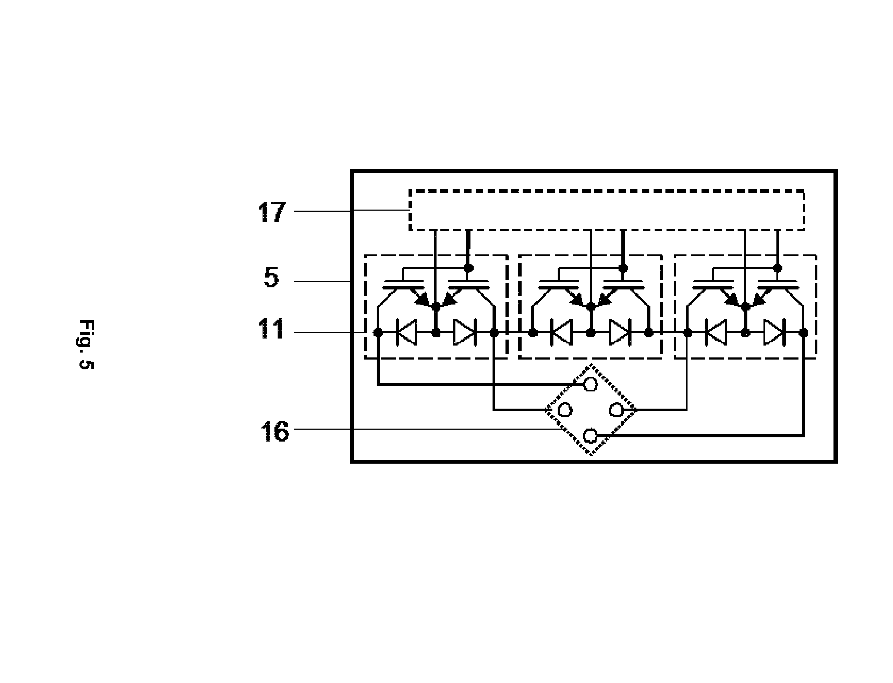

In **Fig. 5** ist ein Ausführungsbeispiel für den Aufbau einer Schalteinrichtung 5 dargestellt. Entsprechend ihrer Aufgabe, bei einer Ausführung der Ladestrecke 2 gemäss **Fig. 3** oder **Fig. 4** jeweils drei Schaltstrecken 12 zu bedienen, setzt sich die Schalteinrichtung 5 aus drei Leistungsmodulen 11 und dem zur Bedienung der drei Schaltstrecken 12 erforderlichen Anschlussbereich 16 sowie einem Gate-Treiber 17 zusammen. Die Leistungsmodule 11 sind in diesem Ausführungsbeispiel als antiseriell verschaltete Paare von IGBT's realisiert, wobei sowohl die Gates als auch die Emitter beider Bauelemente gemeinsam über den Gate-Treiber angesteuert werden. Selbstverständlich sind auch die obligatorischen gegenparallelen Freilaufdioden integriert. Die vier Schaltkontakte sind mit dem Anschlussfeld 16 so verschaltet, dass jeder der drei Leistungsmodule 11 genau eine der drei gemäss **Fig. 3** und **Fig. 4** benötigten Schaltstrecken 12 bedienen, d.h. öffnen oder schliessen kann.

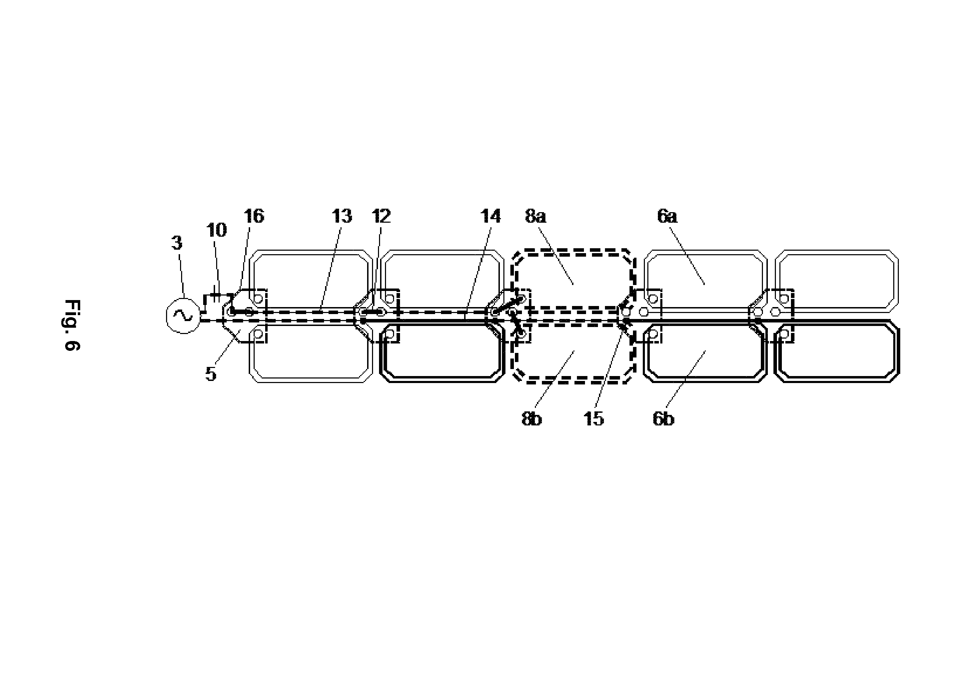

**Fig. 6** veranschaulicht schlussendlich ein Ausführungsbeispiel für die Ladestrecke 2, bei dem die Doppeldipolschleifen 6,8 mit mehr als einer Windung je Doppeldipolschleifen-Hälfte ausgestattet sind. Im dargestellten Ausführungsbeispiel sind es zwei Windungen je Doppeldipolschleifen-Hälfte. Die Windungsanzahl je Doppeldipolschleifen-Hälfte kann entweder über die gesamte Ladestrecke 2 konstant gehalten werden oder auch durch Zu- bzw. Abschaltung einzelner Windungen - bevorzugt unter Beibehaltung gleicher Windungsanzahl für beide Hälften einer Doppeldipolschleife 6,8 - variiert werden, um den Vorgang der Übertragung elektrischer Energie auf das Elektrokraftfahrzeug 1 im Zuge des Befahrens der Ladestrecke 2, etwa eine Beschleunigung des Ladevorganges, voll- oder teilautomatisch zu bewirken oder diesen Vorgang nach diversen Optimierungskriterien zu optimieren. Auch in dieser Abbildung ist der einzige Kondensator 10 des Serienschwingkreises, welcher auf den Resonanzfall dimensioniert werden kann, zu sehen.

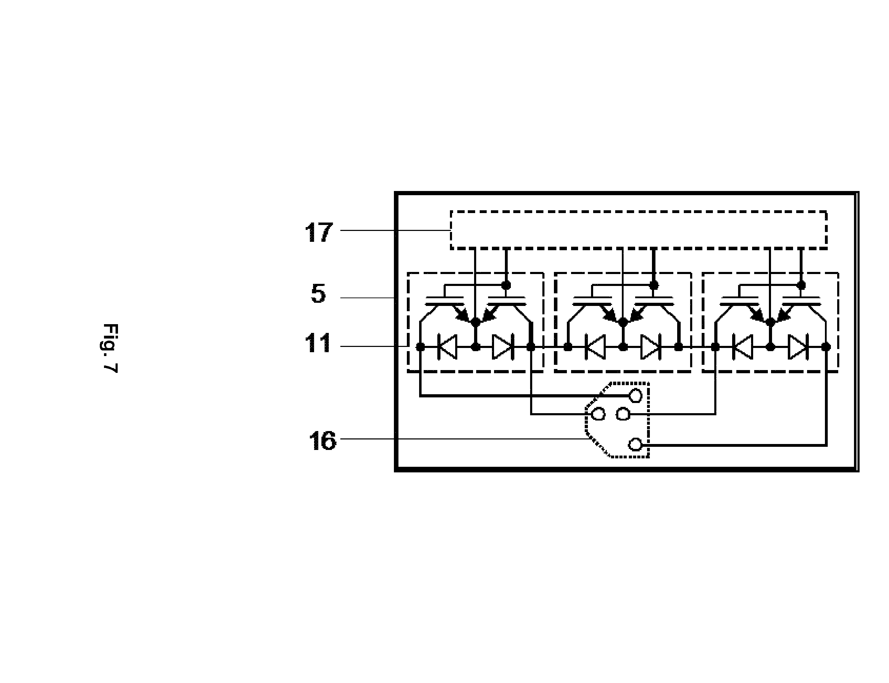

**Fig. 7** zeigt wie **Fig. 5** ein Ausführungsbeispiel für den Aufbau einer Schalteinrichtung 5, wobei der Anschlussbereich 16 der Darstellung in **Fig. 6** angepasst wurde.

Es verbleibt noch hinzuzufügen, dass für die erfindungsgemässen Doppeldipolschleifen unterschiedliche mittlere Durchmesser und unterschiedliche Geometrien ausdrücklich zulässig sind. Dies gilt im speziellen auch für die Gegenüberstellung primärer und sekundärer Doppeldipolschleifen. Die Höhe des Wirkungsgrades der Übertragung elektrischer Energie von der primären auf die sekundäre Seite hängt in erster Linie davon ab, wie die an der Energieübertragung beteiligten Doppeldipolschleifen miteinander magnetisch verkettet sind.

### Bezugszeichenliste

- 1: Elektrokraftfahrzeug
- 2: Ladestrecke
- 3: elektrische Energiequelle
- 4: Energiezuführungsleitung
- 5: Schalteinrichtung
- 6: primäre Doppeldipolschleife
- 7: sekundäre Doppeldipolschleife
- 8: aktive primäre Doppeldipolschleife
- 9: sekundärer Kondensator
- 10: primärer Kondensator
- 11: Leistungsmodul
- 12: Schaltstrecke
- 13: Hinleitung
- 14: Rückleitung
- 15: effektives Leitungsende der Rückleitung 14
- 16: Anschlussbereich der Schalteinrichtung
- 17: Gate-Treiber
- 18: Fahrzeugboden
- 19: Ferritschirm
- 20: Registrierungseinrichtung
- 20a: fahrzeugseitiger Teil der Registrierungseinrichtung (Transponder)
- 20b: stationärer Teil der Registrierungseinrichtung (Lesegerät)
- 21: Gleichrichter
- 22: Fahrbatterie

## Patentansprüche

1. Vorrichtung zum induktiven Laden zumindest eines elektrischen Energiespeichers eines Elektrokraftfahrzeuges (1), umfassend
eine Registrierungseinrichtung (20b) zur Registrierung oder Lokalisierung des Elektrokraftfahrzeuges (1),
eine Energiezuführungsleitung (4) zum Anschluss an eine elektrische Energiequelle (3), vorzugsweise eine Hochfrequenz-Energiequelle, und
ein zur Speisung über die Energiezuführungsleitung (4) mit Wechselstrom vorgesehenes System aus mindestens einer primären Leiterschleifen-Einheit, zum magnetischen Verkoppeln mit einer an einem Elektrokraftfahrzeug (1) angeordneten, sekundären Leiterschleifen-Einheit zum Laden des zumindest einen elektrischen Energiespeichers über die durch Induktion erzeugte elektrische Umlaufspannung in der sekundären Leiterschleifen-Einheit,
**dadurch gekennzeichnet, dass**
die primäre(n) Leiterschleifen-Einheit(en) jeweils mindestens zwei, seitlich nebeneinander angeordnete, eine Doppeldipolschleife (6, 8) bildende Schleifenhälften (6a, 6b, 8a, 8b) aufweisen, die in gegenläufigem Sinn mit elektrischem Strom beaufschlagbar sind **und wobei vorzugsweise** die Registrierungseinrichtung (20b) als Hochfrequenz-Übertragungssystem ausgebildet ist.

2. Vorrichtung nach Anspruch 1, **dadurch gekennzeichnet, dass** mehrere Leiterschleifen-Einheiten vorgesehen sind, die entlang einer Ladestrecke (2) verlegt sind, und dass die Registrierungseinrichtung (20b) zur Lokalisierung des Elektrokraftfahrzeuges (1) auf der Ladestrecke (2) eingerichtet ist.

3. Vorrichtung nach einem der Ansprüche 1 oder 2, **dadurch gekennzeichnet, dass** die Vorrichtung mindestens eine Schalteinrichtung (5) zur Verschaltung der Energiezuführungsleitung (4) und des Systems der mindestens einen primären Leiterschleifen-Einheit umfasst, wobei vorzugsweise jeder primären Leiterschleifen-Einheit mindestens eine Schalteinrichtung (5) zugeordnet ist.

4. Vorrichtung nach Anspruch 3, **dadurch gekennzeichnet, dass** die Ansteuerung der Schalteinrichtungen (5) und die Verschaltung der Energiezuführungsleitung (4) mit dem System primärer Doppeldipolschleifen (6) zur Speisung jeweils jener aktiven primären Doppeldipolschleife (8) durch die elektrische Energiequelle (3) ausgebildet sind, bei welcher das Elektrokraftfahrzeug (1) durch die Registrierungseinrichtung (20b) lokalisiert ist, und wobei vorzugsweise jeweils alle übrigen primären Doppeldipolschleifen (6) stromlos geschaltet sind.

5. Vorrichtung nach einem der vorhergehenden Ansprüche, **dadurch gekennzeichnet, dass** jeweils der durch die elektrische Energiequelle (3) sowie durch die Resistanzen und Induktanzen der Energiezuführungsleitung (4) und der angespeisten aktiven primären Doppeldipolschleife (8) gebildete elektrische Kreis durch einen einzigen, zur elektrischen Energiequelle (3) in Serie geschalteten primären Kondensator (10) zu einem elektrischen Serienschwingkreis ergänzt ist, **wobei vorzugsweise** der primäre Kondensator (10) für Resonanz des Primärkreises dimensioniert ist.

6. Vorrichtung nach einem der vorhergehenden Ansprüche, **dadurch gekennzeichnet, dass** der Primärkreis im Hinblick auf die sekundäre Leiterschleifen-Einheit so dimensioniert ist, dass die Phasenverschiebung des Wechselstromes durch die sekundäre Leiterschleifen-Einheit bevorzugt etwa +90 Grad gegenüber dem Wechselstrom durch die aktive primäre Doppeldipolschleife (8) beträgt.

7. Vorrichtung nach einem der Ansprüche 3 bis 6, **dadurch gekennzeichnet, dass** die Ansteuerung der Schalteinrichtungen (5) zur Umschaltung von einer primären Doppeldipolschleife (6,8) auf die in Fahrtrichtung des Elektrokraftfahrzeuges (1) nachfolgende primäre Doppeldipolschleife (6) im Nulldurchgang des Stromes im primären Serienschwingkreis ausgelegt ist.

8. Vorrichtung nach einem der Ansprüche 3 bis 7, **dadurch gekennzeichnet, dass** jeder primären Doppeldipolschleife (6,8) bevorzugt drei Leistungsmodule (11) einer Schalteinrichtung (5) zugeordnet sind, welche zur Bedienung je einer Schaltstrecke (12) zur Zuschaltung einer ersten Schleifenhälfte (6a,8a) der primären Doppeldipolschleife (6,8), der zweiten Schleifenhälfte (6b,8b) der primären Doppeldipolschleife (6,8) und zur Erstreckung der Energiezufuhr auf die in Fahrtrichtung des Elektrokraftfahrzeuges (1) nachfolgende primäre Doppeldipolschleife (6) ausgebildet sind, **und/oder dass** die Leistungsmodule (11) einer Schalteinrichtung (5) mit MOSFET's oder IGBT's und Gate-Treibern (17) aufgebaut sind.

9. Vorrichtung nach einem der vorhergehenden Ansprüche, **dadurch gekennzeichnet, dass** die Hinleitung (13) der Energiezuführungsleitung (4) zur Zuschaltung aller primären Doppeldipolschleifen (6,8) verzweigt ausgeführt, die Rückleitung (14) jedoch unverzweigt ausgeführt und deren Leitungsende (15) mit einem Anschluss der letzten Schalteinrichtung (5) kurzgeschlossen ist.

10. Vorrichtung nach einem der vorhergehenden Ansprüche, **dadurch gekennzeichnet, dass** die Schleifenhälften (6a,6b,8a,8b) der primären Doppeldipolschleifen (6,8) in der Ladestrecke (2) beidseitig der Energiezuführungsleitung (4) angeordnet sind **und/oder dass** die beiden Schleifenhälften (6a,6b,8a,8b) primärer Doppeldipolschleifen (6,8) von unterschiedlicher Geometrie sind und/oder dass die Schleifenhälften (6a,6b,8a,8b) der primären Doppeldipolschleifen (6,8) zwei oder mehrere Windungen aufweisen.

11. Vorrichtung nach einem der vorhergehenden Ansprüche, **dadurch gekennzeichnet, dass** die Schleifenhälften (6a,6b,8a,8b) der primären Doppeldipolschleifen (6,8) im Verlauf der Ladestrecke (2) hinsichtlich ihrer Windungsanzahl - etwa zur Beschleunigung oder zur voll- oder teilautomatischen technischen Optimierung des Ladevorganges - veränderlich (umschaltbar) ausgeführt sind.

12. Elektrokraftfahrzeug (1) zur Verwendung mit einer Vorrichtung zum induktiven Laden nach einem der Ansprüche 1 bis 11, mit zumindest einem elektrischen Energiespeicher, **dadurch gekennzeichnet, dass** das Elektrokraftfahrzeug (1) umfasst:
eine Registrierungseinrichtung (20a) zum Registrieren durch eine induktive Ladevorrichtung, und
eine sekundäre Leiterschleifen-Einheit zum magnetischen Verkoppeln mit einer in einer induktiven Ladevorrichtung angeordneten, primären Leiterschleifen-Einheit, wobei die sekundäre Leiterschleifen-Einheit zum Zwecke des Ladens mit dem zumindest einen elektrischen Energiespeicher kommuniziert und mindestens zwei, seitlich nebeneinander angeordnete, eine Doppeldipolschleife (7) bildende Schleifenhälften (7a, 7b) aufweist, die in gegenläufigem Sinn verlaufen, **wobei vorzugsweise** die Doppeldipolschleife (7) des Elektrokraftfahrzeuges (1) unterhalb des Fahrzeugbodens (18) oder im Fahrzeugboden (18) angeordnet ist.

13. Elektrokraftfahrzeug nach Anspruch 12, **dadurch gekennzeichnet, dass** zwischen der sekundären Doppeldipolschleife (7) und dem Fahrzeugboden (18) des Elektrokraftfahrzeuges (1) ein Ferritschirm (19) mit einer bevorzugten Dicke von einem oder wenigen Millimetern zur Abschirmung der Karosserie und des Fahrzeuginneren gegen elektromagnetische Felder angeordnet ist.

14. Elektrokraftfahrzeug nach einem der Ansprüche 12 bis 13, **dadurch gekennzeichnet, dass** der sekundäre, einen Energiespeicher des Elektrokraftfahrzeuges (1) über einen Gleichrichter (21) ladende elektrische Kreis einen in Serie geschalteten sekundären Kondensator (9) umfasst, **wobei vorzugsweise**
der sekundäre Kondensator (9) für Resonanz des Sekundärkreises dimensioniert ist.

15. Elektrokraftfahrzeug nach einem der Ansprüche 12 bis 14, **dadurch gekennzeichnet, dass** die beiden Schleifenhälften (7a,7b) der sekundären Doppeldipolschleife (7) von unterschiedlicher Geometrie sind und/oder dass die Schleifenhälften (7a,7b) der sekundären Doppeldipolschleife (7) zwei oder mehrere Windungen aufweisen.
